# EUROPÄISCHE PATENTSCHRIFT

(11) **EP 1 724 010 B1**
(45) Veröffentlichungstag und Bekanntmachung des Hinweises auf die Patenterteilung: **06.07.2011**
(21) Anmeldenummer: 06004792.5
(22) Anmeldetag: 09.03.2006
(51) Int. Cl.: B01J 19/00

(54) **Mikrostrukturreaktor und Verwendung desselben**
Microstructured reactor and use of the same
Réacteur microstructuré et son utilisation

(30) Priorität: 19.05.2005 DE 102005022958
(43) Veröffentlichungstag der Anmeldung: 22.11.2006
(73) Patentinhaber: Karlsruher Institut für Technologie, 76131 Karlsruhe (DE)
(72) Erfinder: Pfeifer Peter, 76351 Linkenheim-Hochstetten (DE); Haas-Santo Katja, 75217 Birkenfeld (DE); Schubert Klaus, 76227 Karlsruhe (DE)

(56) Entgegenhaltungen:
- WO-A-03/106386
- WO-A-2006/010490
- DE-A1- 10 044 526
- DE-A1- 10 102 726
- KLAVS F. JENSEN: "Microreaction engineering ? is small better?" CHEMICAL ENGINEERING SCIENCE, Bd. 56, 2001, Seiten 293-303, XP002443793 Elsevier Science Ltd. - Amsterdam

## Beschreibung

Die Erfindung betrifft einen Mikrostrukturreaktor und dessen Verwendung für eine Hydrierung eines flüssigen Reaktandenstroms gemäß des ersten bzw. fünften Patentanspruchs.

Mikrostrukturreaktoren sind in verschiedenen Ausführungsformen bereits realisiert worden und werden bereits in der Mikroverfahrenstechnik für ausgewählte Versuche eingesetzt. Die Auslegung und der Einsatz dieser Mikrostrukturreaktoren erfolgten dabei unter besonderer Berücksichtigung der mikrotechnischen Rahmenbedingungen bei der Reaktorherstellung.

Eine spezielle Ausführungsform umfasst einen schichtweisen Aufbau des Mikrostrukturreaktors aus einem Metallfolienstapel. Dabei werden in einem ersten Fertigungsschritt Fluidpassagen wie Kanäle oder Reaktionsvolumina als Strukturen in einzelne Folien eingebracht, die dann in einem zweiten Fertigungsschritt dichtend aufeinander gestapelt werden.

In der DE 100 44 526 A1 wird ein derartiger Mikrostrukturreaktor, umfassend einen Stapel mikrostrukturierter Metallfolien zur Durchführung mindestens einer chemischen Reaktion zwischen jeweils zwei Reaktionspartnern beschrieben. Die Reaktionspartner werden als zwei Eduktfraktionen jeweils separat in einer Vielzahl von Fluidführungen eingeführt, wobei die Fluidführungen zwischen den beiden Eduktfraktionen miteinander über eine Fläche eine Vielzahl von Öffnungen fluidisch miteinander verbunden sind. Über diese Öffnungen erfolgt ein flächiger Übertritt von Anteilen der ersten Fluidfraktion in die Fluidführungen der zweiten Fluidfraktion. Erfolgt eine Reaktion zwischen den beiden Fluidfraitonen, bilden die Fluidführungen für die zweite Fluidfraktion um die Öffnungen Reaktionsvolumina. Im Rahmen der beschriebenen Ausführungsform sind die Wandungen dieser Fluidführungen zusätzlich mit einem Katalysator beschichtet.

Ein drittes Strömungskanalmodul mit Kanälen für ein fluidisches Wärmeübertragungsmodul dient der Kühlung insbesondere exotherme Reaktionen.

Ferner offenbart die DE 100 44 526 A1 einen Mikrostrukturreaktor zur Durchführung einer chemischen Reaktion zwischen zwei Reaktanden.

Auch wenn das vorgenannte System für eine gleichmäßige Reaktion und damit Wärmeentwicklung nahezu über den gesamten Mikrostrukturreaktor mit einer effizienten Kühlungsmöglichkeit konzipiert wurde, besteht insbesondere bei Hydrierungsreaktionen die Gefahr von lokalen Überhitzungen im Reaktionsvolumen.

Bei einer Vielzahl von Hydrierungen strebt man eine katalytische Reaktion von Gasphasen als Edukte an (Wasserstoff und zu hydrierender Reaktand als Dampf). Dabei liegen insbesondere die Raum-zeit-Ausbeute pro Katalysatormasse deutlich über denen einer 2-phasig heterogen katalysierter Reaktionsführung. Zudem sind bei reinen Gasphasenprozesse Übertemperaturen am Katalysator durch die Verwendung von Katalytisch beschichteten Wandreaktoren besser kontrollierbar. Übertemperaturen würden insbesondere den Katalysator schädigen, die Selektivität zu Ungunsten des Zielproduktes verringern und darüber hinaus grundsätzlich auch eine Koksbildung fördern.

Bei zwei- wie auch mehrphasig heterogen katalysierter Reaktionen greift man deswegen bevorzugt auf eine Verdünnung des zu hydrierenden Reaktanden z.B. im zielprodukt zurück, da sich ansonsten durch einen schlechten Wärmetransport gas-flüssig und flüssig-fest im Reaktor die Reaktionstemperatur unerwünscht ansteigen würde. Andererseits werden durch Verdünnungen zusätzliche Kosten aufgrund von Zielproduktaufreinigungen verursacht. Bei einer zweiphasig heterogen katalysierten Betriebsweise wäre zudem eine Vergrößerung der Austauschfläche für den Stofftransport über die Phasengrenzflächen gas-flüssig und flüssig-fest sowie eine möglichst isotherme Reaktionsführung erforderlich. Ferner ist der Volumenanteil des Gases (Wasserstoff) deutlich größer als der der zu hydrierenden Substanz, so dass in Abhängigkeit des Reaktionsfortschritts mehrfach Wasserstoff zugegeben werden müsste.

Davon ausgehend ist es Aufgabe der Erfindung, ein Mikrostrukturreaktor vorzuschlagen, der sich in besonderem Maße für auch für vorgenannte zweiphasige Hydrierungen eignet. Ferner liegt die Aufgabe, eine Verwendung eines Mikrostrukturreaktors für eine zweiphasige Hydrierung vorzuschlagen.

Die Aufgabe wird durch einen Mikrostrukturreaktor mit den Merkmalen des Anspruchs 1 und einer Verwendung gemäß Anspruch 5 gelöst. Unteransprüche geben bevorzugte Ausführungsformen wieder.

Die Aufgabe wird durch einen Mikrostrukturreaktor zur Durchführung mindestens einer chemischen Reaktion zwischen je zwei Reaktanten gelöst. Dieser umfasst einen zusammengesetzten Körper mit drei mikrostrukturierten Passagenfraktionen, in denen mindestens zwei Reaktionsmedien sowie zusätzlich mindestens ein Wärmeträgermedien geführt werden. Die Passagefraktionen sind, jeweils als Vertiefungen separat in schichtförmige Komponenten, vorzugsweise Folien oder Platten eingearbeitet, aufeinander gestapelt. Eine mit der Feinheit der Strukturierung ansteigende spezifische Kontaktfläche zwischen den Medien zur jeweiligen Passagenwandung bewirkt eine gute Wärmeübertragung. Die hohen Wärmeübertragungskennzahlen in Mikrostrukturreaktoren lassen somit eine gezielte Temperaturführung zu, so dass die Gefahr einer Verkokung oder Schädigung des Katalysators minimiert wird.

Vorzugsweise ist jeweils eine Passage auf einer Schicht (z.B. Platte, Blech oder Folie) eingearbeitet. In einer ersten Schichtfaktion befinden sich jeweils bevorzugt einseitig eingearbeiteten Fluidkanälen für eine erste Fluidfraktion. In einer zweiten Schichtfraktion ist jeweils ein Reaktionsvolumen, das über eine Vielzahl von Öffnungen mit der ersten Fluidfraktion in Verbindung steht angeordnet. Das Reaktionsvolumen ist dabei Teil der Passage für eine zweite Fluidfraktion.

Die Schichten der ersten und zweiten Schichtfraktion sind jeweils abwechselnd zu einer Schichtfolge aufeinander gestapelt, wobei die vorgenannten Öffnungen vorzugsweise über die gesamte Reaktionsvolumenerstreckung vorzugsweise gleichmäßig in den Schichten der zweiten Schichtfaktion angeordnet sind.

Das Reaktionsvolumen mit einer Schüttung eines Katalysators aufgefüllt, wobei die Passage der zweiten Fluidfraktion sich auf die Zwischenräume beschränkt. Der Begriff Schüttung umfasst nicht nur eine lose Schüttung von Katalysatorpartikeln, sondern auch einen offenporigen Körper wie ein Partikelverbund, der sich durch ein partielles Zusammenhaften oder durch beginnende Sinterung der Partikel aneinander entsteht.

Durch die Anfüllung des Reaktionsvolumens mit der vorgenannten Schüttung mit Katalysatorpartikeln erzielt man gegenüber einem Reaktionsvolumen gemäß der vorgenannten DE 100 44 526 A1 (Katalysator als Reaktionsvolumenwandungsbeschichtung) eine weitere Anhebung der zur Verfügung stehenden spezifischen Katalysatorflächen.

Eine Temperierung der Reaktion findet über ein fluidisches Temperiermedium wie z.B. ein Kühlmedium statt. Dieses wird in einer separaten dritten Fluidpassagenfraktion in Schichten einer dritten Schichtfraktion zwischen den Schichten der ersten und zweiten Schichtfaktion geführt und wird damit integraler Bestandteil der Schichtfolge. Die dritte Fluidpassagenfraktion umfasst vorzugsweise eine Anzahl von in die entsprechenden Schichten eingebrachten rillenförmigen Fluidkanäle.

Die Öffnungen zwischen den beiden Reaktanten, d.h. zwischen den ersten und zweiten Fluidfraktionen sind vorzugsweise einseitig (vgl. nachfolgendes Ausführungsbeispiel) oder beidseitig zwischen dem Reaktionsvolumen und den ersten Fluidführungen angeordnet. Entsprechend sind die ersten Schichten (z.B. Platten oder Folien) einseitig oder beidseitig zur zweiten Schicht angeordnet. Die vorgenannten dritten Schichten dienen der Temperierung und sind als Zwischenlagen in den Schichtverbund integrierbar, wo keine der vorgenannten Öffnungen am Übergang zwischen erster und zweiter Schicht vorgesehen sind.

Die vorgenannten Schichten sind vorzugsweise Metallfolien, die über einen Diffusionsschweißprozess oder andere geeignete Verbindungstechniken wie z.B. Löten oder Laserschweißen zu einem Stapel zusammengeschweißt werden. Das Material muss sich in Bezug auf die durchzuführende Reaktion (Verwendung) passiv verhalten.

Die Erfindung wird beispielhaft anhand einer Ausführungsform mit der folgenden Figur näher erläutert. Es zeigt

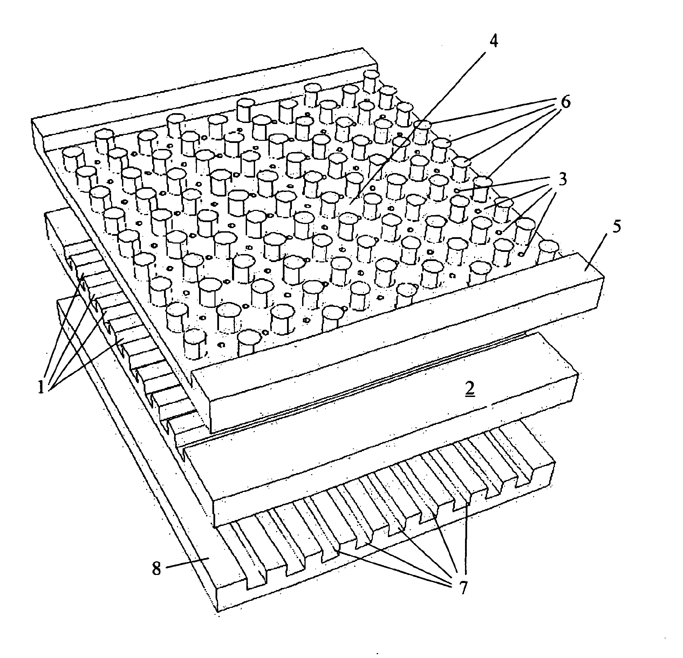

**Fig.1** eine Explosionsdarstellung einer Lagenfolge einer Ausführungsform eines temperierbaren Mikrostrukturreaktors.

Die Ausführungsform, repräsentiert in **Fig.1****,** umfasst drei Passagenfraktionen für je eine Fluidfraktion. Es zeigt lediglich eine der sich in einem Schichtstapel wiederholenden Schichtfolgen, umfassend drei strukturierte Einzelschichten. Der genannte Schichtenstapel stellt lediglich das Kernstück eines nicht als ganzes dargestellten Mikrostrukturreaktors dar. Der Mikrostrukturreaktor umfasst weiterhin geeignete Anschlüsse für die dargestellten Passagefraktionen.

Die erste Passagenfraktion für die erste Fluidfraktion, einem Reaktanden (Reaktionsgas, für Hydrierung Wasserstoff oder Wasserstoffhaltiges Gas), in der ersten Schicht **2** umfasst eine Anzahl mikrostrukturierter Kanäle **1.** Diese Kanäle dienen dazu, das Reaktionsgas, d.h. für eine Hydrierung Wasserstoff, zu den Öffnungen **3** zuzuführen. Die Öffnungen werden bevorzugt über einen Ätz- oder Laserprozess oder mit spanabhebenden Verfahren in die Schichten eingearbeitet.

Die zweite Passagenfraktion für die zweite Fluidfraktion, ebenfalls einem Reaktanden (z.B. Flüssigkeit), in der zweiten Schicht **5** umfasst ein Reaktionsvolumen **4** mit mikrostrukturierten Säulenstrukturen **6** als Abstandshalter zu einer nicht dargestellten Abdeckschicht oder zu einer abdichtenden Schicht einer aufgesetzten nächsten Schichtfolge des Schichtstapels. Das Reaktionsvolumen dient dazu, eine nicht dargestellte Katalysatorschüttung mit geringer Partikelgröße aufzunehmen. Die Reaktion findet im Reaktionsvolumen bevorzugt um die Ausmündungen der Öffnungen **3** statt. Dabei wird die Reaktionswärme durch Reaktion des Wasserstoffes (gasförmig) mit dem zu hydrierenden Reaktanden (flüssig) am Katalysator erzeugt. Durch die entsprechend kleinen Dimensionen des Mikrostrukturreaktors kann die entstehende Wärme ohne größere Übertragungswege über die Wandungen des Reaktionsvolumens abgeführt werden.

Die Öffnungen dienen somit der flächigen Einleitung der ersten Fluidfraktion von der ersten Passagenfaktion **1** in die zweite Fluidfraktion im Reaktionsvolumen **4** (zweite Passagefraktion). Bei einer gasförmigen ersten und flüssigen zweiten Fluidfraktion bilden um die Ausmündungen der Öffnungen im Reaktionsvolumen Gasblasen. Optional sind daher in den Öffnungen Strukturen zur Beeinflussung der Fluidströmung in den Öffnungen vorgesehen, die entweder einen gezielten Strömungsabriss oder einen bestimmten Strömungszustand der ersten Fluidfratkion bei Eintritt in das Reaktionsvolumen bewirken. Hierdurch lässt sich die Phasentransferfläche zwischen den beiden Fluidfraktionen und damit die Reaktionskinetik einstellen. Eine erhöhte Phasentransferfläche bewirkt grundsätzlich einen steigenden Stofftransport zwischen den beiden Reaktanden und führt zu höheren Reaktionsgeschwindigkeiten. Durch eine große Durchdringung der ersten Fluidfraktion in das Reaktionsvolumen, erzielbar z.B. durch eine turbulente Eindüsung z.B. mit hohen Strömungsgeschwindigkeitsanteilen erhöht man dagegen eine Erfassung möglichst großer Katalysatorflächen. So sind Filmdicken der flüssigen zweiten Fluidfraktion gezielt einstellbar (z.B. auf ca. 50 µm), die zu einer technisch relevanten Umsetzung der Mikroverfahrenstechnik im Bereich der Hydrierungen führen können. Bei einer Filmdicke kleiner 50 µm wird der Stofftransport flüssig-fest derart erhöht, dass ein Mehrphasen-Prozess in Mikrostrukturbauweise gegenüber dem Gasphasenprozess attraktiv wird.

Bei einer Reaktion (beispielsweise bei Hydrierungen) ist je nach Abstimmung der Kanalquerschnittsgröße und der Öffnungsquerschnitte bzw. der Abstände der Öffnungen zueinander ein Gradient der Zufuhr des ersten Reaktanden (z.B. Wasserstoffzufuhr) einstellbar. Damit kann individuell nach Reaktionssystem die Maximierung der Reaktionsgeschwindigkeit erzielt werden. Bei zu hohem Gasanteil besteht jedoch die Gefahr des Austreibens der flüssigen zweiten Fluidfraktion aus dem Reaktionsvolumen (zu kleine Verweilzeit der flüssigen Komponente), bei zu niedriger Wasserstoffzufuhr erfolgt u. U. einen nicht vollständiger Reaktionsverlauf oder es werden Teile des Katalysators nicht genutzt.

Die dritte Passagenfraktion, ebenfalls aus mikrostrukturierten Temperierungskanälen **7** bestehend, dient zur Abfuhr der Reaktionswärme mit Hilfe eines Wärmeträgermedium (dritte Fluidfraktion), z.B. Wasser oder Thermoöl. Sie sind als Kanalstrukturen in einer dritten Schicht **8** eingearbeitet. Für eine verbesserte Anschlussmöglichkeit bietet es sich an, die Kanäle der ersten und des dritten Fluidfraktion im Kreuzstrom anzuordnen.

Die drei Schichten **2, 5** und **8** wiesen im Ausführungsbeispiel eine laterale Ausdehnung von 20 x 20 mm sowie eine schichtdicke von 1 mm, die als Strukturen in die Schichten einseitig eingearbeiteten Kanäle **1,** Reaktionsvolumina **4** und Temperierungskanäle **7** Strukturtiefen von 0,5 mm auf. Dabei zeigte sich eine Partikelgröße in der Katalysatorschüttung zwischen 20 und 100 µm als ideal, wobei die Öffnungen Durchmesser kleiner der kleinsten Partikelgröße und ein Abstand größer 1 mm zueinander aufweisen. Für die vorgenannte Hydrierung von z.B. Nitrobenzol eignet sich Palladium- und Kohlenstoffhaltige Festkörpermaterialien als bevorzugtes Katalysatormaterial.

### Bezugszeichenliste

- 1: Kanal
- 2: Erste Schicht
- 3: Öffnung
- 4: Reaktionsvolumen
- 5: Zweite Schicht
- 6: Säulenstrukturen
- 7: Temperierungskanal
- 8: Dritte Schicht

## Patentansprüche

1. Mikrostrukturreaktor zur Durchführung mindestens einer chemischen Reaktion zwischen je zwei Reaktanten, umfassend
a) eine erste Passagenfraktion mit Kanälen **(1)** für eine erste Fluidfraktion,
b) eine zweite Passagenfraktion, umfassend mindestens ein Reaktionsvolumen **(4),** das über eine Vielzahl von Öffnungen **(3)** mit der ersten Passagenfraktion in Verbindung steht, wobei
c) das Reaktionsvolumen **(4)** mit einer Schüttung von Partikeln eines Katalysators aufgefüllt ist,
wobei
d) das Reaktionsvolumen **(4)** eine flächige Ausdehnung mit Säulenstrukturen **(6)** als Abstandshaltern aufweist, wobei sich die Öffnungen **(3)** über die gesamte flächige Ausdehnung erstrecken,
e) zwischen erster und zweiter Passagenfraktion abseits der Öffnungen **(3)** eine dritte Passagenfraktion mit Temperierungskanälen **(7)** für ein Temperiermedium eingesetzt ist, sowie
f) die ersten, zweiten und dritten Passagefraktionen in jeweils eigenen ersten, zweiten und dritten Schichten **(2, 5, 8)** angeordnet sind, und
**entweder**
eine erste, zweite und dritte Schicht **(2, 5, 8)** in der genannten Reihenfolge eine Schichtfolge bilden, die mehrfach wiederholt aufeinander gestapelt den Schichtstapel bilden, wobei die Öffnungen **(3)** einseitig in das Reaktionsvolumen **(4)** ausmünden
**oder**
eine erste, zweite, eine weitere erste und dritte Schicht **(2, 5, 2, 8)** in der genannten Reihenfolge eine Schichtfolge bilden, die mehrfach wiederholt aufeinander gestapelt den Schichtstapel bilden, wobei die Öffnungen **(3)** beidseitig in das Reaktionsvolumen **(4)** ausmünden.

2. Mikrostrukturreaktor nach Anspruch 1, **dadurch gekennzeichnet, dass** die Passagefraktionen als Strukturen einseitig in die Schichten eingearbeitet sind.

3. Mikrostrukturreaktor nach einem der vorgenannten Ansprüche, **dadurch gekennzeichnet, dass** die Schichten durch Metallfolien gebildet sind.

4. Mikrostrukturreaktor nach einem der vorgenannten Ansprüche, **dadurch gekennzeichnet, dass** der Katalysator durch eine Partikelschüttung aus dem Katalysatormaterial gebildet ist, wobei die Partikel eine Größe zwischen 20 und 100 µm aufweisen, sowie die Öffnungen Durchmesser kleiner der kleinsten Partikelgröße und ein Abstand zueinander größer 1 mm aufweisen.

5. Verwendung eines Mikrostrukturreaktors nach einem der vorgenannten Ansprüche für eine Hydrierung eines flüssigen Reaktandenstroms im Reaktionsvolumen, wobei die erste Fluidfraktion Wasserstoffhaltig ist.

6. Verwendung nach Anspruch 5, **dadurch gekennzeichnet, dass** der Katalysator Palladium und Kohlenstoff enthält.

## Claims

1. Microstructured reactor for performance of at least one chemical reaction between two reactants, comprising
a) a first passage fraction with channels (1) for a first fluid fraction,
b) a second passage fraction comprising at least one reaction volume (4) which is connected with the first passage fraction via a multiplicity of openings (3), wherein
c) the reaction volume (4) is filled with a bulk of particles of a catalyst, wherein
d) the reaction volume (4) has a planar extent with column structures (6) as spacers, the openings (3) extending over the entire planar extent,
e) between the first and second passage fraction, away from the openings (3), a third passage fraction is used with tempering channels (7) for a tempering medium, and
f) the first, second and third passage fractions are each arranged in respective first, second and third layers (2, 5, 8), and
either
a first, second and third layer (2, 5, 8) in the said order form a layer sequence which is repeated several times stacked on each other to form the layer stack, the openings (3) being arranged to open on one side into the reaction volume (4),
or
a first, second, and further first and third layers (2, 5, 2, 8) in the said sequence form a layer sequence which is repeated several times stacked on each other to form the layer stack, the openings (3) being arranged to open on both sides into the reaction volume (4).

2. Microstructured reactor according to claim 1, **characterised in that** the passage fractions are worked as structures unilaterally into the layers.

3. Microstructured reactor according to any of the preceding claims, **characterised in that** the layers are formed by metal films.

4. Microstructured reactor according to any of the preceding claims, **characterised in that** the catalyst is formed by a particle bulk of catalyst materials, the particles having a size between 20 and 100 µm, and the openings having diameters of less than the smallest particle size and a mutual spacing of more than 1 mm.

5. Use of a microstructured reactor according to any of the preceding claims for hydration of a fluid reactant flow in a reaction volume, the first fluid fraction containing hydrogen.

6. Use according to claim 5, **characterised in that** the catalyst contains palladium and carbon.

## Revendications

1. Réacteur microstructuré pour effectuer au moins une réaction chimique entre deux réactifs comprenant
a) un premier plateau de passages avec des canaux (1) pour une première fraction de fluide,
b) un second plateau de passages comprenant au moins un volume de réaction (4) communiquant par de nombreux orifices (3) avec le premier plateau de passages,
c) le volume de réaction (4) étant rempli d'une masse de particules d'un catalyseur,
d) le volume de réaction (4) ayant une extension en surface avec des structures de colonnes (6) comme écarteur, les orifices (3) occupant toute l'extension en surface,
e) un troisième plateau de passages est prévu entre le premier et le second plateau de passages, à l'écart des orifices (3) avec des canaux (7) de mise en température pour un milieu de mise en température, et
f) les premier, second et troisième plateaux de passages sont prévues respectivement dans une première, une seconde et une troisième couches (2, 5, 8), propre, et
soit la première, la seconde et la troisième couches (2, 5, 8) constituent dans cet ordre une suite de couches qui est empilée plusieurs fois pour constituer la pile de couches, les orifices (3) débouchant d'un côté dans le volume de réaction (4),
soit
la première, la seconde, une autre première et la troisième couches (2, 5, 2, 8) constituent dans cet ordre une suite de couches qui sont empilées de manière répétée plusieurs fois pour former la pile de couches, les orifices (3) débouchant des deux cotés dans le volume de réaction (4).

2. Réacteur microstructuré selon la revendication 1,
**caractérisé en ce que**
les plateaux de passages sont usinés comme des structures dans un côté des couches.

3. Réacteur microstructuré selon l'une des revendications précédentes, **caractérisé en ce que**
les couches sont constituées par des films métalliques.

4. Réacteur microstructuré selon l'une des revendications précédentes, **caractérisé en ce que**
le catalyseur est formé par une masse de particules de matière de catalyseur,
les particules ayant une dimension comprise entre 20 et 100 µm, et les orifices ayant un diamètre inférieur à la plus petite taille de particules et un écart qui les sépare qui est supérieur à 1 mm.

5. Utilisation d'un réacteur microstructuré selon l'une des revendications précédentes pour hydrurer une veine de réactif liquide dans le volume de réaction, la première fraction de fluide contenant de l'hydrogène.

6. Utilisation selon la revendication 5,
**caractérisée en ce que**
le catalyseur contient du palladium et du carbone.
